# EUROPEAN PATENT APPLICATION

(11) **EP 4 635 795 A1**
(43) Date of publication of application: **22.10.2025**
(21) Application number: 24171277.7
(22) Date of filing: 19.04.2024
(51) Int. Cl.: B60N 2/42, B60N 2/75

(54) **A CENTRE CONSOLE UNIT FOR A MOTOR VEHICLE**

(71) Applicant: Marelli Automotive Systems Europe plc., Llanelli, Carmarthenshire SA14 8HU (GB)
(72) Inventor: BOITCEV, Andrei, Milton Keynes, MK9 4AE (GB); PATANKAR, Kalpak, Milton Keynes, MK10 9RP (GB)
(74) Representative: Haseltine Lake Kempner LLP

(57) **Abstract**

A centre console unit for a motor vehicle is provided. The centre console unit comprises: a body portion comprising an upper surface for forming or supporting an arm rest for an occupant of the vehicle; a rear leg for extending between the body portion and a floor of the vehicle for supporting the body portion relative to the floor of the vehicle at a rear end of the body portion; and a front leg for extending between the body portion and the floor of the vehicle for supporting the body portion relative to the floor of the vehicle at a front end of the body portion, wherein the front leg comprises a helical structure forming at least part of a structural load path between the body portion and the floor of the vehicle.

## Description

### Technical Field

The present disclosure relates to a centre console unit for a motor vehicle and is particularly, although not exclusively, concerned with a centre console unit for a motor vehicle with improved energy storage performance during side collisions of the vehicle.

### Background

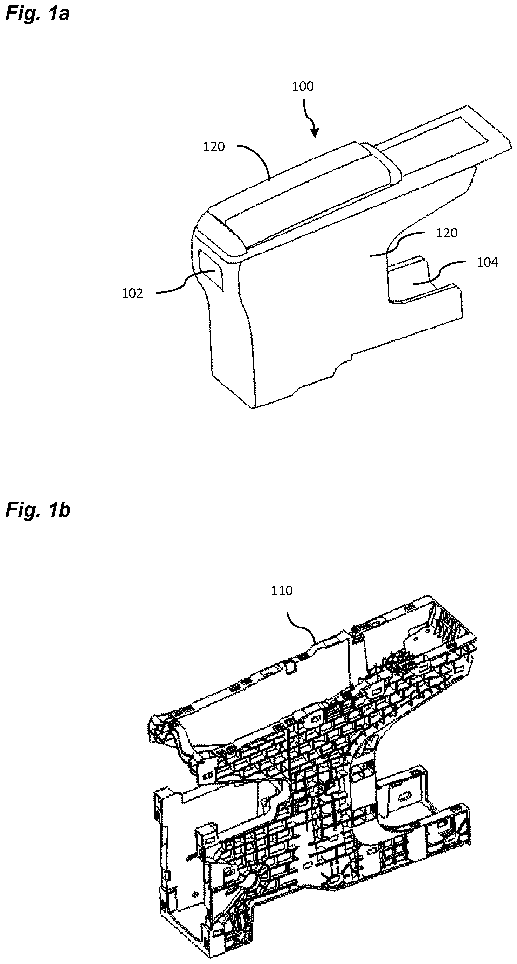

With reference to Figures 1a and 1b, motor vehicles typically comprise a centre console unit 100, which may be arranged between seats of the vehicles, such as between a driver and front passenger seat. The centre console unit often provides an armrest of the occupant on an upper surface of the centre console unit and typically comprises one or more storage compartments 102, 104, for occupants of the vehicle, such as the driver, and front and/or rear passengers to store items whilst travelling in the vehicle.

The centre console unit 100 may also act to prevent or reduce the severity of injuries caused to occupants of the vehicle in the event of collisions in the vehicle and, in particular, side collisions. For example, in the event of a side collision of the vehicle an occupant of the vehicle may impact the centre console unit which may prevent the occupant from impacting another occupant of the vehicle. As shown in Figure 1b, the centre console unit may comprise a structural member 110, e.g. formed from a metal material, provided inside one or more trim portions 120 of the centre console unit so that the centre console unit is sufficiently strong and stiff to prevent an occupant colliding with the centre console unit for passing through the centre console unit, or deflecting the centre console unit to impact another occupant.

Further, the structural member 110 and the trim portions 120 may be together configured such that, when the occupants impacts the centre console unit, the centre console deforms and/or deflects to slow and absorption energy from the occupant in a desirable manner so as to reduce the risk of injury to the occupant.

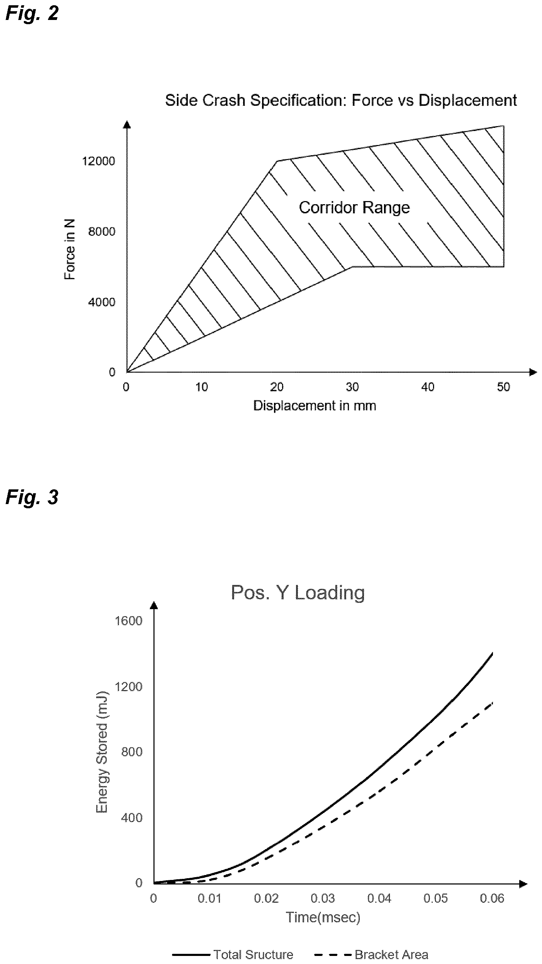

As illustrated in Figure 2, in order to slow an occupant colliding with the centre console unit whilst preventing or reducing injury to the occupant, it may be desirable for a relationship between force acting on the occupant and displacement of the centre console unit due to the collision with the occupant to be within upper and lower bounds.

As shown in Figure 3, the previously proposed centre console unit may achieve a desirable force/displacement relationship by absorbing a majority of energy form the occupant in the metal structural member 110.

### Statements of Invention

According to an aspect of the present disclosure, there is provided a centre console unit for a motor vehicle, wherein the centre console unit comprises: a body portion comprising an upper surface for forming or supporting an arm rest for an occupant of the vehicle; a first, e.g. rear, leg for extending between the body portion and a floor of the vehicle for supporting the body portion relative to the floor of the vehicle at a first, e.g. rear, end of the body portion; and a second, e.g. front, leg for extending between the body portion and the floor of the vehicle for supporting the body portion relative to the floor of the vehicle at a second, e.g. front, end of the body portion, wherein the front leg comprises a helical structure forming at least part of a structural load path between the body portion and the floor of the vehicle.

The front and rear legs may be spaced apart in a lateral direction of the body portion. In other words, the front and rear legs may be for supporting the body portion at diagonally opposite corners of the body portion.

The rear leg may comprise a foot portion at a distal end of the rear leg. The foot portion may comprise an opening for receiving a fastener for coupling the rear leg to the floor of the vehicle. The opening may comprise a slot extending in the lateral direction of the central console unit. The slot may be arcuate about a position at which the front leg is couplable to the floor of the vehicle. The slot may be configured to extend in a first lateral direction to one side of the fastener only, when the centre console unit is coupled to the floor of the vehicle.

The rear leg may be configured to deflect in a lateral direction during an initial loading of the centre console unit in the first lateral direction or a second lateral direction opposite the first lateral direction.

The centre console may be configured to apply a torsional load to the helical structure of the front leg as the rear leg deflects in the first or second lateral directions. The rear leg may be configured to slide relative to the floor during subsequent loading in the second lateral direction, such that the fastener passes through the slot. The centre console may be configured to apply a torsional load to the helical structure of the front leg as the rear leg slide in the first lateral direction. The rear leg may be configured to deflect further in the lateral direction during subsequent loading in the first lateral direction.

The rear leg may be coupled to the body portion on a side of the body portion positioned in the first lateral direction from a centre of the body portion. The rear leg may extend in a direction with a component in the first lateral direction between the distal end of the rear leg and the body portion. During initial loading in the first lateral direction, the rear leg may be configured to deflect so that the rear leg extends in a direction with a smaller component in the first lateral direction. The rear leg may be configured to slide relative to the floor during the subsequent loading in the second lateral direction when the rear leg extends in a substantially vertical direction between the floor of the vehicle and the body portion.

The helical structure may comprise a central cylinder and two or more members protruding radially outward and extending helically about the central cylinder. The members may extend about the central cylinder in a direction opposite a direction in which the helical structure is loaded when the rear leg is loaded in the second lateral direction. In other words, the centre console unit may be configured such that loading the rear leg in the second lateral direction, causes the helical member to be loaded in a direction which increases an angle through which the helical members extend about the central cylinder. Alternatively, the members may extend about the central cylinder in a direction opposite a direction in which the helical structure is loaded when the rear leg is loaded in the first lateral direction. In other words, the centre console unit may be configured such that loading the rear leg in the first lateral direction, causes the helical member to be loaded in a direction which increases an angle through which the helical members extend about the central cylinder.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention. For example, features described in relation to the first mentioned aspect may be combined with the features of the second mentioned aspect.

### Brief Description of the Drawings

For a better understanding of the present invention, and to show more clearly how it may be carried into effect, reference will now be made, by way of example, to the accompanying drawings, in which:
Figure 1a is a rear perspective view of a previously proposed centre console unit for a motor vehicle;
Figure 1b is a rear perspective view of a structural member for the previously proposed centre console shown in Figure 1a;
Figure 2 is a graph showing upper and lower bounds of desirable force relative to displacement of a centre console unit during a side collision of a motor vehicle for reducing the risk of injury to an occupant during the collision;
Figure 3 is a graph illustrating energy stored over time by the previously proposed centre console unit illustrated in Figures 1a and 1b in a side collision of a motor vehicle during which an occupant collides with the centre console unit;
Figures 4a and , collectively referred to as Figure 4, are front perspective views of a centre console unit according to arrangements of the present disclosure, with trim portions of the centre console unit omitted in Figure 4b;
Figure 5 is a front perspective view of a motor vehicle comprising the centre console unit shown in Figure 4 installed between front seats of the motor vehicle;
Figure 6 is a perspective view of a helical structure for the centre console unit shown in Figure 4;
Figures 7a to 7e are rear cross-sectional views illustrating the deformation and displacement of the centre console unit shown in Figure 4 during loading of the centre console unit in a first lateral direction;
Figure 8 is a top partial view of a foot of a rear leg of the centre console unit shown in Figure 4;
Figure 9 is a graph illustrating energy stored over time by the centre console unit illustrated in Figure 4 in a side collision of the motor vehicle shown in Figure 5 during which an occupant collides with the centre console unit loading the centre console unit in the first lateral direction;
Figures 10a to 10d are rear cross sectional views illustrating the deformation and displacement of the centre console unit shown in Figure 4 during loading of the centre console unit in a second lateral direction opposite the first lateral direction;
Figure 11 is a graph illustrating energy stored over time by the centre console unit illustrated in Figure 4 in a side collision of the motor vehicle shown in Figure 5 during which an occupant collides with the centre console unit loading the centre console unit in the second lateral direction.

### Detailed Description

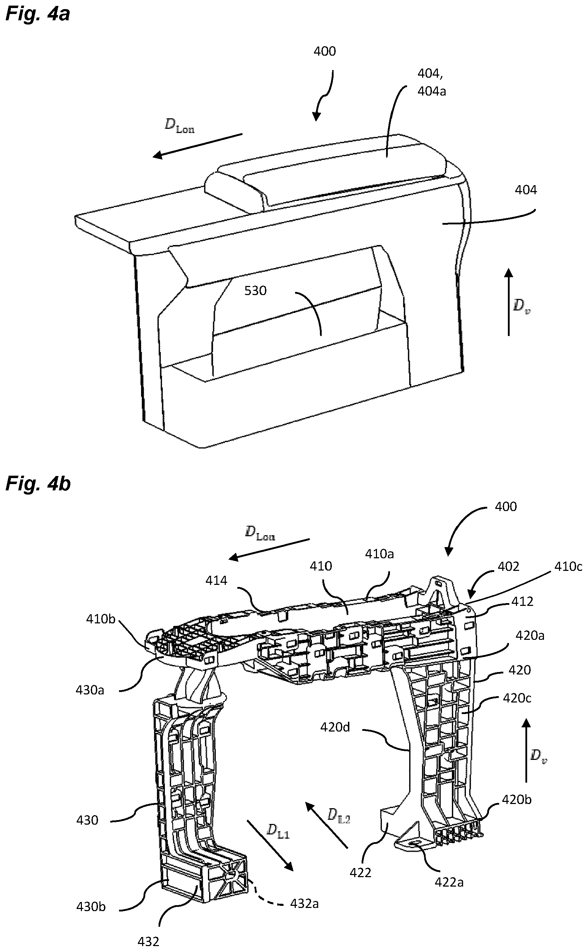

With reference to Figures 4a and 4b, a centre console unit 400, e.g. for a motor vehicle according to arrangements of the present disclosure will now be described. The centre console unit 400 may be configured to be installed in a motor vehicle, e.g. by coupling to a floor of the vehicle. For example, the centre console unit 400 may be configured to be coupled to the floor of the vehicle using mechanical fasteners, e.g. threaded fasteners, such as bolts, or any other fastener configured to apply a clamping force between the centre console unit and the floor of the vehicle, e.g. in a vertical direction Dᵥ of the vehicle and centre console unit.

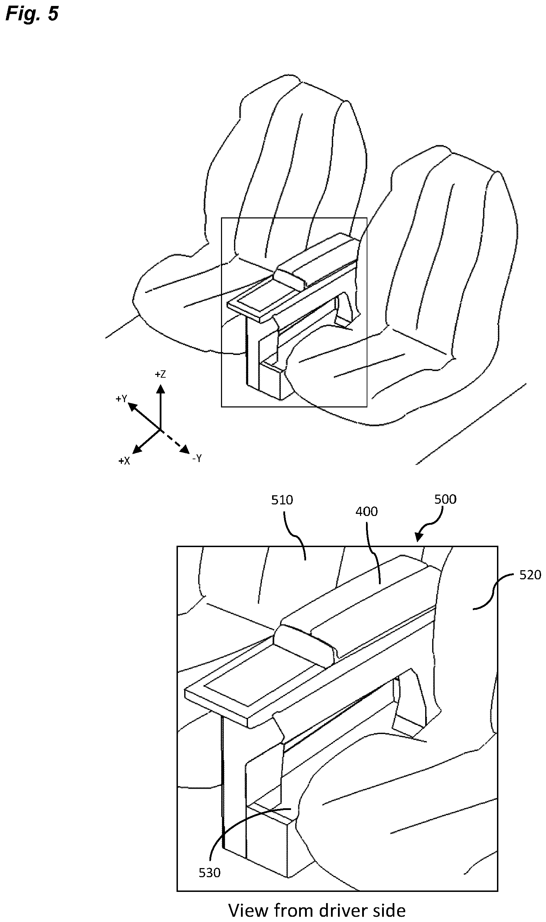

As illustrated in Figure 5, the centre console unit 400 may be configured to be installed between, e.g. laterally between, a pair of seats 510, 520 of a vehicle 500. For example, the centre console unit may be configured to be installed between front seats 510, 520 of the motor vehicle 500, e.g. between a driver's seat and front passenger seat of the vehicle.

The centre console unit 400 may comprise a structural member 402, for transmitting forces received by the centre console unit, e.g. as described in greater detail below, to a floor or other structure of the motor vehicle to which the centre console unit is coupled, and one or more trim portions 404 coupled to the structural member 402. The trim portions may be configured to improve the aesthetic properties and/or ergonomic properties of the centre console unit.

Referring in particular to Figure 4b, the centre console unit 400, e.g. the structural member 402 of the centre console unit, comprises a body portion 410 having an upper surface 410a for forming, or supporting, an arm rest 404a for an occupant of the vehicle, e.g. sat in one of the seats 510, 520 between which the centre console is arranges. As illustrated in Figure 4a, the arm rest 404a may be formed by one or more of the trim portions 404 of the centre console unit. The body portion comprises a first, e.g. rear, end 410c and a second, e.g. front, end 410b. A longitudinal direction D_{Lon} of the centre console unit may be the direction between the front and rear ends of the body portion. The front end 410b is to be arranged closer to the front of the vehicle than the rear end, when the centre console is provided within a motor vehicle. In other words, when the longitudinal direction of the centre console is aligned with the longitudinal direction of the motor vehicle, the front end of the body portion may point forwards, e.g. relative to a direction of travel of the vehicle, and the rear end of the body portion may point rearwards.

The centre console unit 400, e.g. the structural member 402 of the centre console unit, further comprises a first, e.g. rear leg 420 for extending between the body portion 410 and the floor of the vehicle. The rear leg 420 is for supporting the body portion of the centre console unit relative to the floor of the vehicle at a rear end of the body portion, e.g. at a position on the body portion closer to the rear end of the body portion than the front end, e.g. relative to the vehicle in which the centre console unit 400 is to be installed.

The rear leg 420 is coupled to, or integrally formed with, the body portion at a proximal end 420a of the rear leg. The rear leg 420 comprises a first, e.g. rear, foot 422 formed at a distal end 420b of the front leg. The rear foot 422 may be configured to be coupled to the floor of the vehicle. The centre console unit 400 may be configured to be coupled to the floor of the vehicle at one or more fastening locations 422a on rear foot 422. Although in Figures 4b, a single fastening position is indicated on the rear foot, in other arrangements, two, or more than two fastener locations may be provided on the rear foot. One or more of the fastening locations may be spaced apart from one or more others of the fastening locations in a lateral direction of the centre console unit (perpendicular to the longitudinal direction) and may be aligned in the longitudinal direction D_{Lon} of the centre console unit, e.g. with respective other fastener location. Alternatively, the one or more of the fastening locations may be spaced apart from the one or more others of the fastener locations, e.g. respective other fastener locations, in the longitudinal direction of the centre console unit in addition to or as an alternative to being spaced apart in the lateral direction.

The rear leg 420 may be coupled to, or integrally formed with, the body portion 410 on, e.g. at or close to, a first lateral side 412 of the body portion. For example, the rear leg may extend from the body portion with a greater proportion, e.g. of a thickness, of the rear leg closer to the first lateral side of the body portion than a second lateral side 414. The rear foot 422 may extend in a lateral direction, e.g. a second lateral direction D_{L2}, of the centre console unit, e.g. towards the second lateral side of the centre console unit, at the distal end of the rear leg. In this way, the rear foot may be configured to engage with and transmit loads from the rear leg to the floor of the vehicle over a portion of the floor of the vehicle having a distance in the lateral direction of the centre console unit greater than a thickness of the rear leg in the lateral direction. For example, a width of the rear foot in the lateral direction may be approximately equal to a width of the body portion in the lateral direction. Further, a footprint of the rear foot may be aligned with the body portion in the lateral direction.

The rear leg 420 may comprise a first lateral side 420c which may be aligned with, or substantially parallel with and offset from, a first lateral side 412 of the body portion. Alternatively, the first lateral side 420c may extend in a direction with a component in the first lateral direction D_{L1}, e.g. towards the first lateral side 412 between the distal end 420b of the rear leg and the body portion 410. The rear leg may further comprise a second lateral side 420d opposite the first lateral side. The second lateral side 420d may extend in a direction with a component in the first lateral direction of the centre console unit between the distal end 420b of the rear leg and the body portion 410. For example, the second lateral side 420d may be parallel with the first lateral side 420c. Alternatively, the second lateral side 420d may be parallel with the first lateral side 412 of the body portion, or may extend in a direction with a component in the second lateral direction of the centre console unit between the distal end 420b of the rear leg and the body portion 410.

The centre console unit 400, e.g. the structural member 402 of the centre console unit, further comprises a second, e.g. front, leg 430 for extending between the body portion 410 and the floor of the vehicle. The front leg 430 is for supporting the body portion of the centre console unit relative to the floor of the vehicle at a front end of the body portion, e.g. at a position on the body portion closer to the front end of the body portion then the rear end, e.g. relative to the vehicle in which the centre console unit 400 is to be installed.

The front leg 430 is coupled to, or integrally formed with, the body portion at a proximal end 430a of the front leg. The front leg 430 comprises a second, e.g. front, foot 432 formed at a distal end 430b of the front leg. The front foot 432 may be configured to be coupled to the floor of the vehicle. The centre console unit 400 may be configured to be coupled to the floor of the vehicle at one or more fastening locations 432a on the front foot 432. Although in Figures 4b, a single fastening position is indicated on the front foot, in other arrangements, two, or more than two fastener locations may be provided on the front foot. One or more of the fastening locations may be spaced apart from one or more others of the fastening locations in the lateral direction of the centre console unit and may be aligned in the longitudinal direction D_{Lon} of the centre console unit, e.g. with respective other fastener location. Alternatively, the one or more of the fastening locations may be spaced apart from the one or more others of the fastener locations, e.g. respective other fastener locations, in the longitudinal direction of the centre console unit in addition to or as an alternative to being spaced apart in the lateral direction.

The front leg 430 may be coupled to, or integrally formed with, the body portion 410 on, e.g. at or close to, the second lateral side 414 of the body portion. For example, the front leg may extend from the body portion with a greater proportion of the front leg, e.g. of the thickness of the front leg, closer to the second lateral side of the body portion than the first lateral side 412. The front foot 432 may extend in a lateral direction, e.g. a first lateral direction D_{L1}, of the centre console unit, e.g. towards the first lateral side of the centre console unit at the distal end of the front leg. In this way, the front foot may be configured to engage with and transmit loads from the front leg to the floor of the vehicle over a portion of the floor of the vehicle having a distance in the lateral direction of the centre console unit greater than a thickness of the front leg in the lateral direction. For example, a width of the front foot in the lateral direction may be approximately equal to a width of the body portion in the lateral direction. Further, a footprint of the front foot may be aligned in the body portion in the lateral direction.

As shown in Figures 4a and 5, the centre console unit may define a storage volume 530 for occupants of the vehicle, such as the driven, front and/or rear passengers to store items during a journey in the vehicle. As illustrated, the trim portions of the centre consoles may form a tray, box or other container for receiving the items to be stored. The storage volume 530 may extend between the front and rear legs in the longitudinal direction D_{Lon} of the counter console unit. Further, the storage volume 530 may extend in the lateral direction of the console unit between the front and rear legs. Due to the configuration of the legs of the centre console unit, e.g. being disposed on the first and second lateral side of the body portion respectively, the storage volume 530 may be greater in size than a storage volume provided by a conventionally designed centre console unit of the same overall size. Further, the storage volume 530 may be more easily accessible to the occupants.

As illustrated in Figure 4b, the front leg 430 comprises a helical, e.g. spiral or corkscrew shaped, structure 600 configured to form at least part of a structural load path between the body portion 410 and the front foot. In other words, the front leg 430 is configured such that loads applied to the centre console unit that are reacted via the front leg are transmitted through the helical structure 600.

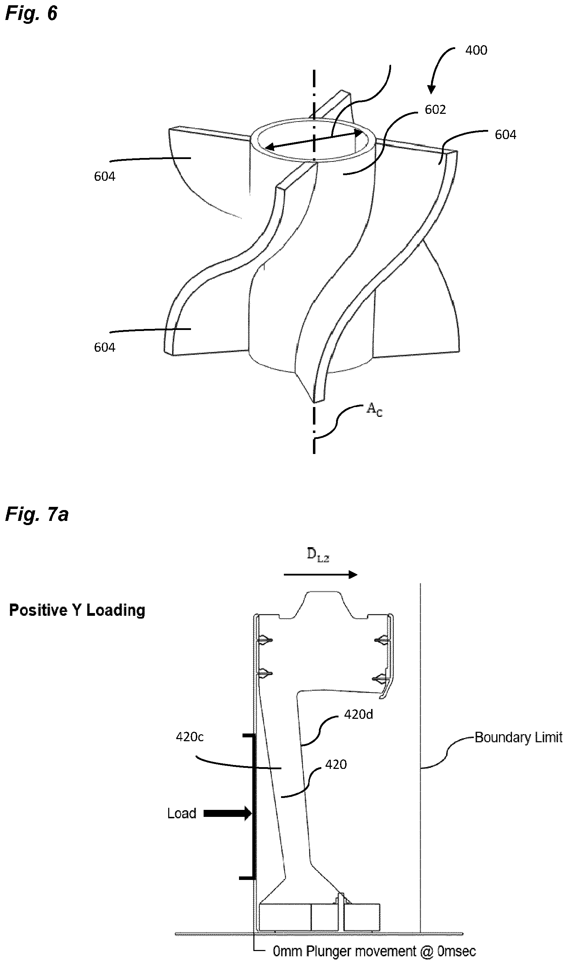

With reference to Figure 6, the helical structure 600 may comprise a central portion 602, which extends along a central axis Ac in a longitudinal direction of the helical structure and a plurality of helical members 604, e.g. which extend helically, e.g. spiral or corkscrew, about the central portion 602. The helical members 604 may project radially outward from the central portion, e.g. relative to the central axis A_{C}. The helical structure may comprise two or more helical members, such as three, four, five, six or more than six helical members 604. The central portion 602 may be substantially cylindrical and may be hollow, e.g. tubular. For example, the central portion 602 may be a substantially cylindrical tube.

In the arrangement shown in Figure 6, the helical members 604 extend in a clockwise direction about the central portion 602 from the top to the bottom of the helical structure. However, in other arrangements, the helical members may extend about the central portion in and anti-clockwise or counter-clockwise direction from the top to the bottom of the helical member.

In the arrangement shown in Figure 6, a distance by which the helical members 604 extend radially outwardly from the central portion is substantially constant along the helically extending length of the helical members. However, in other arrangements, the distance by which the helical members 604 extend radially outwardly from the central portion may vary, for example, the helical members 604 extend radially outwardly from the central portion by a greater distance towards the ends of the central portion than at the middle of the central portion along the central axis Ac, or vice versa.

As illustrated in Figure 6, the helical members 604 may extend around the central portion in a direction with a greater component in the axial direction of the central portion at the ends of the helical structure than at the middle of the helical structure. For example, at the ends of helical structure, the helical members may extend in a substantially axial direction. At the middle of the central portion, the helical members may extend in a direction with a greater component in a circumferential direction than at the ends of the central portion. For example, at the middle of the central portion along the central axis, the helical members may extend in a direction with substantially equal components in the circumferential direction and axial direction relative to the central axis, or a greater component in the circumferential direction than in the axial direction.

During a side collision of the motor vehicle 500, an occupant of the vehicle may collide with the centre console unit 400, thereby applying a lateral load on the centre console unit. Depending on the side of the centre console unit into which the occupant collides, the centre console unit may loaded in in a first, or negative, lateral direction D_{L1} or a second, or position, lateral direction D_{L2} opposite the first lateral direction. Loading of the centre console unit in the first lateral direction may correspond to an impact into the second lateral side of the centre console unit and loading of the centre console unit in the second lateral direction may correspond to an impact into the first lateral side of the centre console unit.

As shown in greater detail below, loading of the centre console unit in the lateral directions may lead to lateral deflections of the rear leg 420 of the centre console unit. In contrast, due to the presence of the helical structure 600 in the load path between the body portion and front foot, loading of the centre console unit in the lateral directions may lead to torsional deflections of the front leg, as the helical structure is loaded in clockwise and anti-clockwise directions (viewed from above) when load is applied to the centre console in the first and second lateral directions respectively.

As can be from Figures 4b and 5, as well as Figures 7a to 7e, when an occupant moves from a seat of the vehicle to impact the first lateral side 412 of the centre console unit during a side collision of the vehicle, the occupant may impact the centre console unit at a position on the rear leg of the centre console unit closer to distal end 420b of the rear leg compared to when the occupant impacts the rear leg of the centre console unit on the second lateral side, due to the rear leg being arranged on the first lateral side of the centre console unit. Accordingly, loading at the rear leg on the first lateral side of the centre console unit may be at a lower height from the floor of the vehicle than loading on the second lateral side 414. Due to the relative heights at which the loading is applied in the first and second lateral directions during the collision. The loading applied may lead to greater magnitudes of deflections when the centre console unit is loaded in the first lateral direction D_{L1} compared to the second lateral direction D_{L2}.

Deflections of the centre console unit, e.g. of the body portion 410, due to loading of the centre console unit in the second lateral direction D_{L2}, may lead to the helical structure being loaded in an anti-clockwise direction, when viewed from above, which may act to increase the angle about which the helical members extend about the central portion of the helical structure. In contrast, deflections of the centre console unit, e.g. of the body portion, due to loading of the centre console unit in the first lateral direction D_{L1}, may lead to the helical structure being loaded in a clockwise direction, when viewed from above, which may act to reduce the angle about which the helical members extend about the central portion of the helical structure, e.g. to straighten the helical members. Helical members may typically be stiffer in directions in which deflections act to straighten the helical members and hence the helical structure may be stiffer in the clockwise direction. Additionally, helical members may store more energy through deformations in directions in which deflections act to straighten the helical members and hence the helical structure may store more energy when deformed a particular amount in the clockwise direction compared to in the anti-clockwise direction.

In the arrangements illustrated, the helical structure is configured to store more energy when deformed a particular amount by load applied in the first lateral direction, which may correspond to the direction in which loading applied to the centre console loads to deflections of a greater magnitude, due to the height above the floor of the vehicle at which the loads are applied.

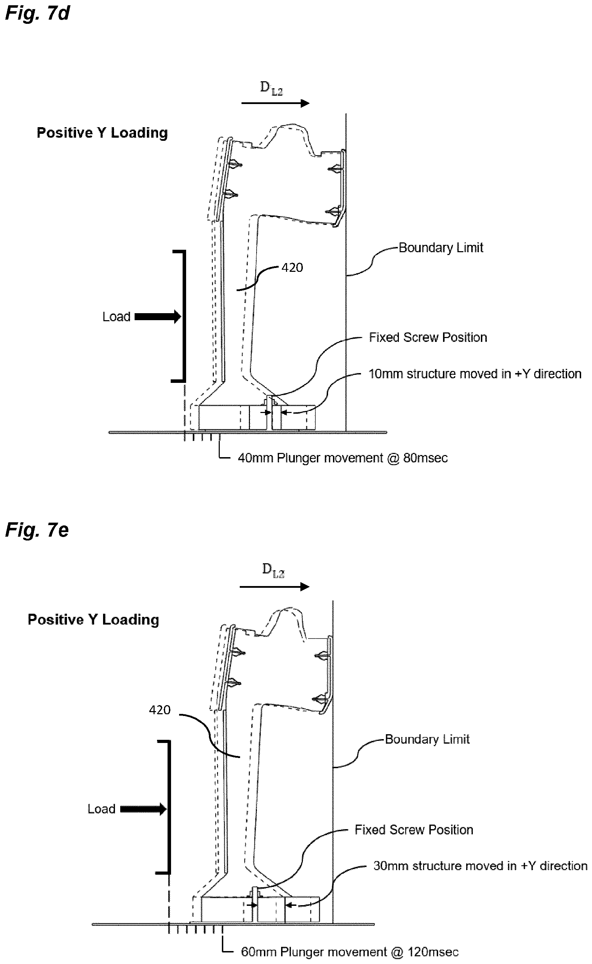

Figures 7a to 7e illustrate the behaviour, e.g. movements, deflections and/or deformation, of the centre console unit 400 when the centre console unit is loaded in the second lateral direction D_{L2}. During loading of centre console in the second lateral direction, the helical structure of the front leg may be loaded in torsion in the direction in which the helical members are urged to extend by a greater angle about the central portion, that in an undeformed condition.

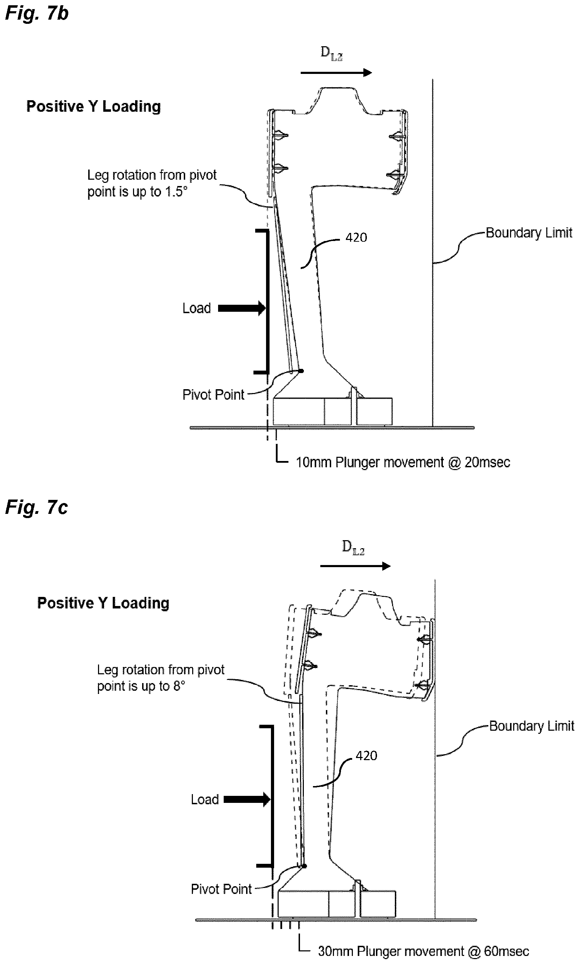

As illustrated in Figures 7a, 7b and 7c, during initial loading of the centre console in the first lateral direction, e.g. when the magnitude of the load applied to the centre console, or reacted at the rear foot, is less than a threshold load. The rear leg 420 may deflect in the second lateral direction. As illustrated, during the initial loading in the second lateral direction, the rear leg may be configured to deflect so that the rear leg, e.g. the first and/or second lateral sides of the rear leg, extend in a direction with a smaller component in the first lateral direction between the foot and the proximal end of the rear leg. In other words, during the initial loading in the second lateral direction, the rear leg may be configured to deflect so that the rear leg extends in a direction more closely aligned with a vertical direction (e.g. a direction perpendicular to the lateral and longitudinal directions of the centre console unit).

As mentioned above, the rear leg 420 of the centre console unit may be coupled to the floor of the vehicle by applying a clamping force between the rear leg and the floor of the vehicle, which may be in a direction perpendicular to the lateral directions D_{L1}, D_{L2} and the longitudinal direction D_{Lon} of the centre console unit. Movements of the rear leg in the lateral direction may therefore be reacted via a friction force between the rear leg 420 and the floor of the vehicle. As shown in Figure 7d, the centre console unit may be configured such that, during subsequent loading of the centre console unit in the second lateral direction, the rear leg of the centre console unit slides relative to the floor of the vehicle to which the centre console unit is coupled. This may be due to the lateral load exceeding the maximum friction force supported by the clamping load applied between the rear leg and the vehicle floor, e.g. the threshold load.

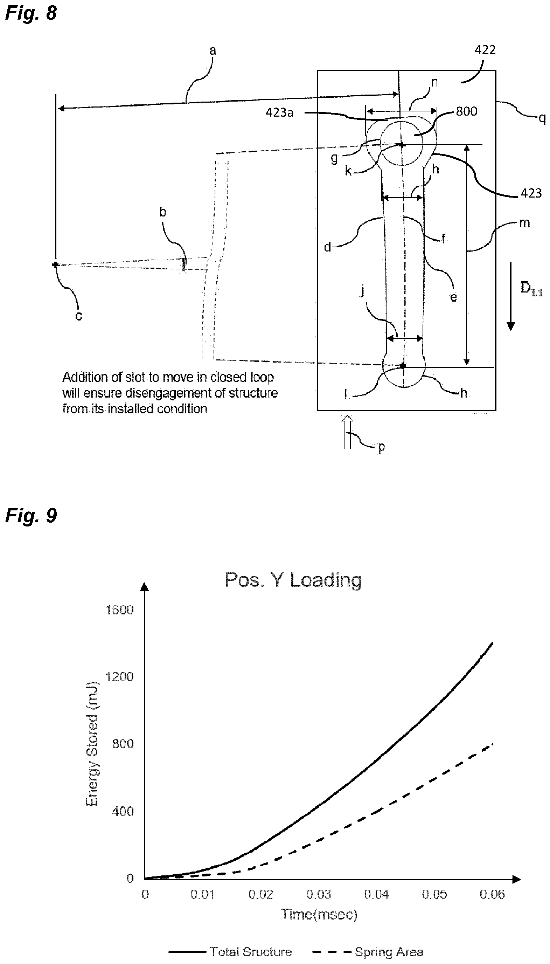

Referring now to Figure 8, the rear foot 422 of the centre consoles unit may comprise an opening 423 for receiving a fastener 800 for coupling the centre console unit to the floor of the vehicle at the rear foot. The opening 423 may extend through the foot in a direction perpendicular to the lateral and longitudinal directions of the centre console unit, e.g. in a direction parallel with the direction in which the legs generally extends from the body portion to the rear foot, e.g. the vertical direction. Accordingly, fastener 800 may extend through the opening 423 in the vertical direction for coupling the centre console unit to the floor of the vehicle at the rear foot 422.

As depicted, the opening 423 may comprise an elongate slot which may extend in a lateral direction of the centre console unit. Due to the slot extending in the lateral direction of the centre console unit, the fastener 800 may be able to move within the slot to enable the centre console unit to slide at the position of the fastener when a lateral load on the centre console unit exceeds a friction force between the rear foot 422 and the vehicle floor.

The opening 423 may be configured, e.g. shaped, such that when the centre control unit 400 is coupled to the vehicle in a desirable position for normal operation, e.g. with the longitudinal direction of the centre console aligned or parallel with the longitudinal direction of the vehicle, the fastener is positioned at a first end 423a of the slot. Accordingly, the slot may extend from the first end 423a in a single lateral direction of the centre console unit only and may thereby permit sliding of the centre console unit in a single lateral direction only. In the arrangements depicted in Figure 8, the slot extends from the first end 423a in the first lateral direction D_{L1} only. Hence, when the centre console unit is loaded in the first lateral direction D_{L1}, the centre console unit may not slide in the first lateral direction.

As depicted, the slot 423 may be arcuate. In particular, the slot may be arcuate about a position at which the front leg is couplable to the floor of the vehicle, e.g. an opening formed in the front foot for receiving a fastener to couple the centre console unit to the vehicle floor at the front foot.

Figure 9 illustrates the proportion of energy stored within the centre console unit during a side collision of the vehicle that is stored within the helical structure.

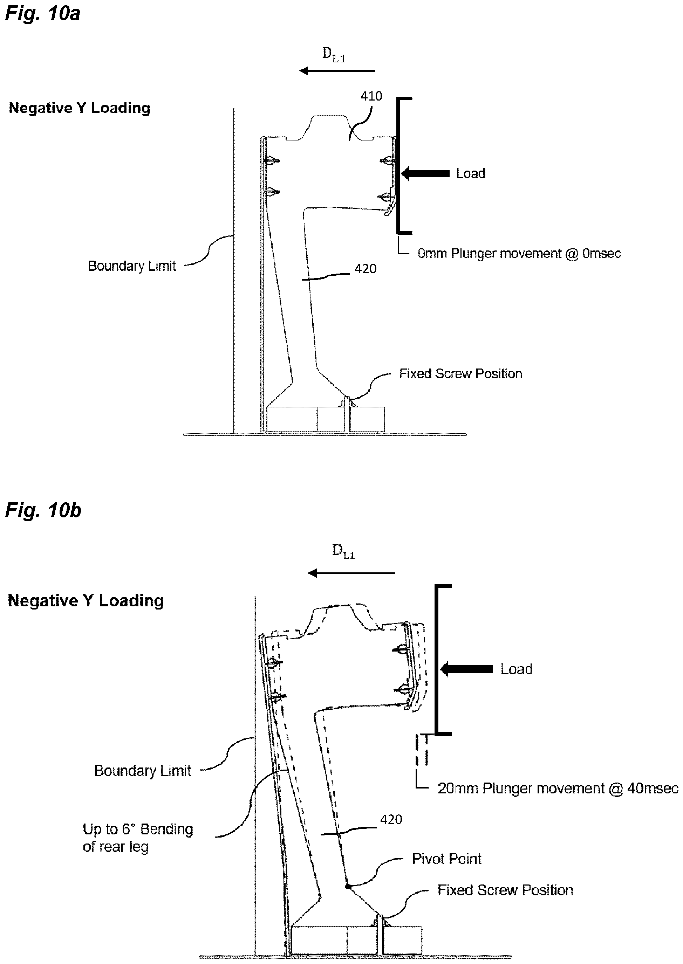

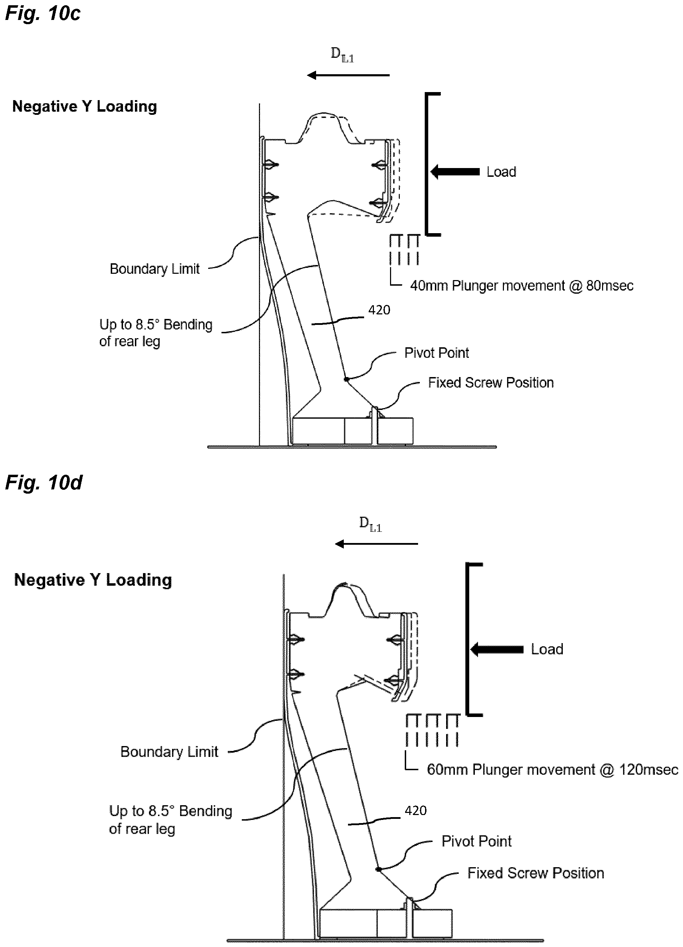

Figures 10a to 10d illustrate the behaviour, e.g. movements, deflections and/or deformation, of the centre console unit 400 when the centre console unit is loaded in the first lateral direction D_{L1}. During loading of centre console in the first lateral direction, the helical structure of the front leg may be loaded in torsion in the direction in which the helical members are urged to straighten e.g. so as to extend by a smaller angle about the central portion, that in an undeformed condition.

As shown in Figures 10a to 10c, during initial loading of the centre console in the first lateral direction, e.g. when the magnitude of the load applied to the centre console, or reacted at the rear foot, is less than the threshold load. The rear leg may deflect in the first lateral direction. As described above with reference to Figure 8, the slot 423 formed in the rear foot may extend to one side of the fastener only. Hence, the rear foot may be prevented from sliding in the first lateral direction. Accordingly, as shown in Figure 10d, during subsequent loading of the centre console in the first lateral direction D_{L1}, e.g. when the magnitude of the load applied to the centre console, or reacted at the rear foot, is greater than the threshold load, the rear leg may deflect by a greater amount in the first lateral direction.

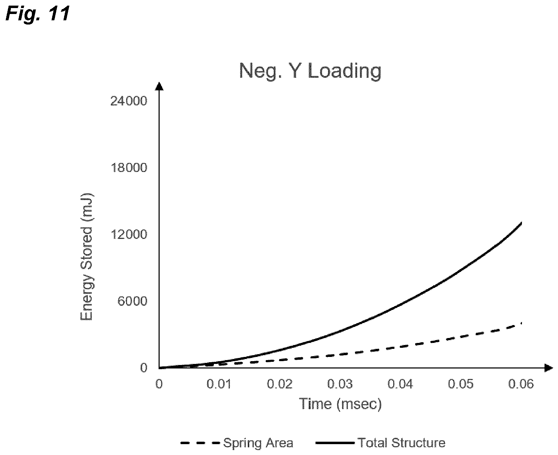

As illustrated in Figure 11, a smaller proportion of the total energy stored by the structure may be stored in the helical structure when the central console unit is loaded in second lateral direction compared to in the first lateral direction.

It will be appreciated by those skilled in the art that although the invention has been described by way of example, with reference to one or more exemplary examples, it is not limited to the disclosed examples and that alternative examples could be constructed without departing from the scope of the invention as defined by the appended claims.

## Claims

1. A centre console unit for a motor vehicle, wherein the centre console unit comprises:
a body portion comprising an upper surface for forming or supporting an arm rest for an occupant of the vehicle;
a rear leg for extending between the body portion and a floor of the vehicle for supporting the body portion relative to the floor of the vehicle at a rear end of the body portion; and
a front leg for extending between the body portion and the floor of the vehicle for supporting the body portion relative to the floor of the vehicle at a front end of the body portion, wherein the front leg comprises a helical structure forming at least part of a structural load path between the body portion and the floor of the vehicle.

2. The centre console unit of claim 1, wherein the front and rear legs are spaced apart in a lateral direction of the body portion.

3. The centre console unit of claim 1 or 2, wherein the rear leg comprises a foot portion at a distal end of the rear leg, wherein the foot portion comprises an opening for receiving a fastener for coupling the rear leg to the floor of the vehicle.

4. The centre console unit of claim 3, wherein the opening comprises a slot extending in the lateral direction of the central console unit.

5. The centre console unit of claim 4, wherein the slot is arcuate about a position at which the front leg is couplable to the floor of the vehicle.

6. The centre console unit of any of claims 3 to 5, wherein the slot is configured to extend in a first lateral direction to one side of the fastener only, when the centre console unit is coupled to the floor of the vehicle.

7. The centre console unit of any of the preceding claims, wherein the rear leg is configured to deflect in a lateral direction during an initial loading of the centre console unit in the first lateral direction or a second lateral direction opposite the first lateral direction.

8. The centre console of claim 7, wherein the centre console is configured to apply a torsional load to the helical structure of the front leg as the rear leg deflects in the first or second lateral directions.

9. The centre console of claim 7 or 8 when depending on claim 4, wherein the rear leg is configured to slide relative to the floor during subsequent loading in the second lateral direction, such that the fastener passes through the slot.

10. The centre console unit of any of the preceding claims, wherein the rear leg is configured to deflect further in the lateral direction during subsequent loading in the first lateral direction.

11. The centre console unit of any of the preceding claims, wherein the rear leg is coupled to the body portion on a side of the body portion positioned in the first lateral direction from a centre of the body portion.

12. The centre console unit of any of the preceding claims, wherein the rear leg extends in a direction with a component in the first lateral direction between the distal end of the rear leg and the body portion.

13. The centre console unit of claim 12 when depending on claim 7, wherein during initial loading in the first lateral direction, the rear leg is configured to deflect so that the rear leg extends in a direction with a smaller component in the first lateral direction.

14. The centre console unit of claim 13 when depending on claim 9, wherein the rear leg is configured to slide relative to the floor during the subsequent loading in the second lateral direction when the rear leg extends in a substantially vertical direction between the floor of the vehicle and the body portion.

15. The centre console unit of any of the preceding claims, wherein the helical structure comprises a central cylinder and two or more members protruding radially outward and extending helically about the central cylinder.

16. The centre console unit of claim 15, wherein the members extend about the central cylinder in a direction opposite a direction in which the helical structure is loaded when the rear leg is loaded in the second lateral direction.

## Amended claims

### Amended claims in accordance with Rule 137(2) EPC.

1. A centre console unit (400) for a motor vehicle (500), wherein the centre console unit comprises:
a body portion (410) comprising an upper surface (410a) for forming or supporting an arm rest (404a) for an occupant of the vehicle;
a rear leg (420) for extending between the body portion and a floor of the vehicle for supporting the body portion relative to the floor of the vehicle at a rear end (410c) of the body portion; and
a front leg (430) for extending between the body portion and the floor of the vehicle for supporting the body portion relative to the floor of the vehicle at a front end (410b) of the body portion, wherein the front leg comprises a helical structure (600) forming at least part of a structural load path between the body portion and the floor of the vehicle, wherein the helical structure comprises a central cylinder and two or more members protruding radially outward and extending helically about the central cylinder.

2. The centre console unit (400) of claim 1, wherein the front and rear legs (420, 430) are spaced apart in a lateral direction of the body portion (410).

3. The centre console unit (400) of claim 1 or 2, wherein the rear leg (420) comprises a foot portion at a distal end (420b) of the rear leg, wherein the foot portion comprises an opening (423) for receiving a fastener (800) for coupling the rear leg to the floor of the vehicle.

4. The centre console unit (400) of claim 3, wherein the opening (423) comprises a slot extending in the lateral direction of the central console unit.

5. The centre console unit (400) of claim 4, wherein the slot is arcuate about a position at which the front leg (430) is couplable to the floor of the vehicle.

6. The centre console unit (400) of any of claims 3 to 5, wherein the slot is configured to extend in a first lateral direction to one side of the fastener (800) only, when the centre console unit is coupled to the floor of the vehicle.

7. The centre console unit (400) of any of the preceding claims, wherein the rear leg (420) is configured to deflect in a lateral direction during an initial loading of the centre console unit in the first lateral direction or a second lateral direction opposite the first lateral direction.

8. The centre console unit (400) of claim 7, wherein the centre console is configured to apply a torsional load to the helical structure (600) of the front leg (430) as the rear leg (420) deflects in the first or second lateral directions.

9. The centre console unit (400) of claim 7 or 8 when depending on claim 4, wherein the rear leg (420) is configured to slide relative to the floor during subsequent loading in the second lateral direction, such that the fastener (800) passes through the slot.

10. The centre console unit (400) of any of the preceding claims, wherein the rear leg (420) is configured to deflect further in the lateral direction during subsequent loading in the first lateral direction.

11. The centre console unit (400) of any of the preceding claims, wherein the rear leg (420) is coupled to the body portion (410) on a side of the body portion positioned in the first lateral direction from a centre of the body portion.

12. The centre console unit (400) of any of the preceding claims, wherein the rear leg (420) extends in a direction with a component in the first lateral direction between the distal end (420b) of the rear leg and the body portion (410).

13. The centre console unit (400) of claim 12 when depending on claim 7, wherein during initial loading in the first lateral direction, the rear leg (420) is configured to deflect so that the rear leg extends in a direction with a smaller component in the first lateral direction.

14. The centre console unit (400) of claim 13 when depending on claim 9, wherein the rear leg (420) is configured to slide relative to the floor during the subsequent loading in the second lateral direction when the rear leg extends in a substantially vertical direction between the floor of the vehicle and the body portion (410).

15. The centre console unit (400) of any of the preceding claims, wherein the members extend about the central cylinder in a direction opposite a direction in which the helical structure (600) is loaded when the rear leg (420) is loaded in the second lateral direction.
